# EUROPÄISCHE PATENTSCHRIFT

(11) **EP 2 116 752 B1**
(45) Veröffentlichungstag und Bekanntmachung des Hinweises auf die Patenterteilung: **14.03.2012**
(21) Anmeldenummer: 09005386.9
(22) Anmeldetag: 15.04.2009
(51) Int. Cl.: F16L 55/04, F16L 55/033, B60H 1/32, B60H 1/00

(54) **Fluiddruckpulsationsdämpfungsvorrichtung**
Fluid pressure pulsation attenuation device
Dispositif d'amortissement de pulsations de pression de fluide

(30) Priorität: 17.04.2008 DE 102008019488
(43) Veröffentlichungstag der Anmeldung: 11.11.2009
(73) Patentinhaber: Behr GmbH & Co. KG, 70469 Stuttgart (DE)
(72) Erfinder: Paul, Michael, 74343 Sachsenheim (DE); Burr, Reinhold, 89518 Heidenheim (DE)
(74) Vertreter: Grauel, Andreas

(56) Entgegenhaltungen:
- DE-A1- 4 302 977
- DE-A1- 10 316 946
- US-A- 5 492 451
- US-A1- 2004 016 230
- US-B1- 6 234 758
- US-B1- 6 658 118

## Beschreibung

Die Erfindung betrifft eine Fluiddruckpulsationsdämpfungsvorrichtung zum Dämpfen von Druckpulsationen in Fluiden mit einem hohen Flüssigkeitsanteil und/oder von Fluiden mit einem hohen Druck. Die Erfindung betrifft weiterhin eine Vorrichtung mit wenigstens einem geschlossenen Fluidkreislauf, insbesondere eine Klimaanlage mit einem Kältemittelkreislauf, besonders vorzugsweise eine Kraftfahrzeugklimaanlage mit einem Kältemittelkreislauf..

Der Transport von Fluiden durch Leitungen basiert auf Druckunterschieden zwischen unterschiedlichen Stellen der Leitung. Wenn also Fluide durch eine Rohrleitung hindurch gefördert werden sollen, so erhöht man an einer Quellöffnung der Leitung den Druck des Fluids, so dass dieses aufgrund des dann entstehenden Druckunterschieds zu einer Zielöffnung der Leitung strömt. Zur Erzeugung des dazu erforderlichen Drucks werden in aller Regel mechanische Pumpen bzw. Kompressoren verwendet.

Die derzeit gängigsten Bauformen derartiger Pumpen bzw. Kompressoren arbeiten nicht-kontinuierlich. Bei Ihnen wird ein sich zyklisch vergrößerndes bzw. sich verkleinerndes Volumen vorgesehen, in das das zu fördernde Fluid bei einem niedrigen Druckniveau angesaugt und bei einem erhöhten Druckniveau ausgegeben wird. Übliche Bauformen für derartige nichtkontinuierliche Pumpen bzw. Kompressoren sind Kolbenpumpen, Scrollpumpen und Taumelscheibenpumpen.

Der Vorteil derartiger Pumpen ist ihr relativ einfacher Aufbau und ihr hoher Wirkungsgrad. Ein Nachteil liegt jedoch in der nicht-kontinuierlichen Arbeitsweise selbst begründet: Es kommt zu zyklischen Druckpulsationen an der Ausgabeöffnung der Pumpe bzw. des Kompressors. Diese sind insbesondere bei hohen Drücken, beziehungsweise im Falle nicht-kompressibler Fluide bzw. nur geringfügig kompressibler Fluide problematisch. Als nichtkompressible Fluide bzw. nur geringfügig kompressible Fluide sind Flüssigkeiten (ggf. auch Flüssigkeiten, in denen Feststoffe mitgeführt werden), Gas/Flüssigkeitsgemische mit hohem Flüssigkeitsanteil sowie überkritische Fluide, deren Phasenzustand sich im Übergangsbereich zur Flüssigkeit befindet, zu nennen. Gerade in diesen Fällen können die Druckpulsationen eine nicht unerhebliche mechanische Belastung für die nachfolgenden Bauteile darstellen. So kann es bei den nachfolgenden Bauteilen beispielsweise zu frühzeitigen Sprödigkeitsbrüchen aufgrund der mechanischen Druckbelastung kommen. Im Extremfall kann es sogar aufgrund der Dmckputsationen auch zu einer thermischen Erhitzung der nachfolgenden Komponenten kommen, bis hin zu einem thermischen Ausfall der entsprechenden Komponente.

Aber selbst wenn derartige mechanische Probleme keine Rolle spielen, so können die resultierenden Druckpulsationen zumindest zu einer Geräuschentwicklung führen, die unerwünscht ist.

Als beispielhafter Anwendungsfall seien hier Klimaanlagen, insbesondere Kraftfahrzeugklimaanlagen genannt: Abhängig von den Lastbedingungen des Verdichters kann das vom Verdichter erzeugte Geräusch bis in den Innenraum des Kraftfahrzeugs, bzw. in den zu klimatisierenden Raum eingetragen werden. Da - im Falle von Kraftfahrzeugen - das Verdichtergeräusch eine andere Charakteristik als das Motorengeräusch aufweist, wird dieses selbst dann als lästig empfunden, wenn der Gesamtgeräuschpegel im Innenraum unverändert bleibt. Als kritische Geräuschquelle sind dabei insbesondere die Geräuschkomponenten zu nennen, die über den Kältemittelkreislauf und die Kältemittelleitungen letztlich bin in den Innenraum des Kraftfahrzeugs übertragen werden. Die Druckpulsationen des Fluids werden dabei beispielsweise im Verdampfer in Körperschall umgewandelt, der als Geräusch über die abgekühlte Luft bis in den Kraftfahrzeuginnenraum eindringen kann. Weiterhin können auch alle Anbindungsstellen des Kältemittelkreislaufs und seiner Komponenten potentielle akustische Einkoppelstellen dar.

Um die Druckpulsationen des Fluids zu dämpfen werden im Falle von nicht-kompressiblen Fluiden bzw. im Falle von geringfügig kompressiblen Fluiden derzeit vielfach sogenannte Muffter verwendet. Diese weisen Querschnittssprünge, an denen Schallwellen reflektiert werden und/oder ein größeres Volumen auf, in dem die in der Eingangsleitung vorhandenen Druckpulsationen quasi über ein großes Volumen hinweg "gemittelt" werden. Durch die Ausgabeöffnung des Mufflers sind die Druckpulsationen entsprechend bedämpft. Um die Effektivität des Mufflers zu erhöhen, können auch mehrere derartige Volumenkammern vorgesehen werden. Nachteilig bei derartigen Mufflern ist vor allen Dingen der nicht unerhebliche Platzbedarf. Darüber hinaus kommt es zwischen Eingangsöffnung und Ausgangsöffnung des Mufflers zu einem Druckabfall des Fluids, so dass es zu entsprechenden Verlusten kommt.

Eine weitere im Stand der Technik bekannte Möglichkeit, die Druckpulsationen bei Kraftfahrzeugklimaanlagen zu dämpfen besteht in der Verwendung elastischer Leitungen für den Kältemittelkreislauf. Nachteilig sind hier jedoch insbesondere die Kosten für die flexiblen Leitungen. Darüber hinaus altern flexible Kältemittelleitungen relativ schnell, so dass diese entsprechend oft ausgewechselt werden müssen, und es gegebenenfalls auch zu unerwarteten Ausfällen der Klimaanlage infolge schadhafter Leitungen kommen kann. Schließlich sind für manche Kältemittel ausreichend flexible und dennoch dichte Kältemittelleitung nicht bzw. kaum verfügbar. Dies ist insbesondere im Falle von R744 (Kohlendioxid, CO₂) der Fall.

Für den Fall rein gasförmiger Medien bei im Wesentlichen Umgebungsdrücken wurden auch schon Geräuschminderungssysteme vorgeschlagen, die auf der Aussendung von Gegenschall beruhen. Dabei wird der zu bedämpfende unerwünschte Schall mit Hilfe eines Mikrofons aufgenommen und um 180° phasenversetzt wieder ausgesendet. Aufgrund von destruktiver Interferenz wird der Schall im Idealfall völlig aufgehoben, in der Praxis jedoch zumindest stark gedämpft. Derartige Systeme werden oftmals auch als ANR-Systeme (wobei ANR für "active noise reduction" steht) bezeichnet.

Der auszusendende Gegenschall wird in der Regel mit Hilfe elektronischer Steuerungen erzeugt. Derartige Verfahren bzw. zur Durchführung derartiger Verfahren geeignete Vorrichtungen sind beispielsweise in DE 198 32 517 C2, DE 198 22 148 A1 oder WO 2007/062889 A2 beschrieben worden. Zum Teil sind jedoch auch rein mechanische Systeme vorgeschlagen worden, wie beispielsweise in DE 103 22 570 A1, EP 0 335 941 B1 oder DE 697 31 704 T2.

Sämtliche bislang bekannten Rückkopplungssysteme bzw. ANR-Systeme sind jedoch auf die Verwendung mit rein gasförmigen Fluiden bzw. mit zumindest im Wesentlichen gasförmigen Fluiden beschränkt. Die Anwendung beschränkt sich darüber hinaus auch auf Systeme mit relativ niedrigem Gasdrück, wie beispielsweise unterhalb von 2 bar oder 5 bar. Dies liegt insbesondere an den Problemen, die ansonsten mit den Gegenschallquellen, beziehungsweise mit den erforderlichen Sensoren auftreten. Bislang werden in der Praxis als Gegenschallquellen fast durchweg klassische Lautsprecher bzw. geeignet angesteuerte Lautsprechermembranen verwendet. Diese leisten im Falle kompressibler Medien auch gute Dienste, da hier in der Praxis niemals ganz zu vermeidende Abweichungen vom idealen Rückkopplungssignal durch die Kompressibilität des Gases aufgefangen werden können. Im Falle von nicht-kompressiblen bzw. nur geringfügig kompressiblen Fluiden sind die entstehenden Gegendrücke ungleich höher. Auch wenn die Drücke des zu dämpfenden Mediums gewisse Grenzen überschreiten, sind herkömmliche Lautsprecher bzw. Membranen nicht mehr verwendbar, da diese unter dem hohen Auflastdruck in der Regel in eine Endstellung gedrückt werden, und somit keinen Gegenschall mehr erzeugen können.

Andere Vorrichtungen zur Dämpfung von Druckschwingungen in Hydraulikleitungen sind aus den Dokumenten DE 103 16946 A1 oder US6658118B1 bekannt und stellen den Oberbegriff des Anspruchs 1 dar.

Ein weiteres Problem liegt in der höheren Schallgeschwindigkeit von nicht-kompressiblen, von nur geringfügig kompressiblen Fluiden, bzw. von Fluiden unter hohem Druck. Hier sind die "Antworten" auf Primärschall deutlich schneller abzugeben, was bislang als nicht realisierbar angesehen wurde. Aus diesen Gründen wurden ANR-Systeme daher bislang für Flüssigkeitssysteme bzw. für Systeme mit hohen Fluiddrücken per se als nicht verwendbar angesehen. Zumindest wurde bislang rein elastisch wirkenden Systemen der Vorzug gegeben, bzw. wurden die ANR-Systeme eher zur Dämpfung des bereits entstandenen Luftschalls verwendet.

Die Erfinder haben es sich zur Aufgabe gemacht, für Systeme mit Fluiden, die einen hohen Flüssigkeitsanteil aufweisen, eine wirksame Dämpfung von Druckpulsationen zu ermöglichen.

Dazu wird vorgeschlagen, eine Fluiddruckpulsationsdämpfungsvorrichtung nach dem Oberbegriff des Anspruchs 1 derart auszubilden, dass zumindest eine Volumenbeeinflussungsvorrichtung eine irreversible Volumenveränderung verursacht. Überraschenderweise hat sich herausgestellt, dass, abweichend vom bislang vorherrschenden Paradigma, auf destruktiver Interferenz basierende Pulsationsdämpfungsvorrichtungen auch bei nicht-kompressiblen bzw. bei nur geringfügig kompressiblen Fluiden sowie bei Fluiden mit hohen Drücken vorteilhaft anwendbar sind. Ausreichend schnell arbeitende elektronische Regelmechanismen sind nämlich zwischenzeitlich kostengünstig verfügbar geworden. Auch werden insbesondere im Folgenden Aktuatoren und Sensoren beschrieben, die insbesondere auch im Zusammenhang mit nicht-kompressiblen, mit nur geringfügig kompressiblen Fluiden bzw. mit Fluiden unter hohen Drücken verwendet werden können. Unter "nicht-kompressiblen" bzw. unter nur "geringfügig kompressiblen" Fluiden sind in diesem Zusammenhang insbesondere Fluide zu verstehen, die einen hohen Flüssigkeitsanteil aufweisen und umgekehrt. Unter "geringfügig kompressibei" sind insbesondere Kompressibilitätsmoduln von wenigen Prozent des Kompressionsmoduls von Luft (beispielsweise von kleiner gleich 1%, 2%, 3%, 4%, 5%, 7%, 10%, 15% oder 20%) zu verstehen. Unter einem hohen Flüssigkeitsanteil sind insbesondere Anteile von 70%, 75%, 80%, 85%, 90%, 93%, 95%, 96%, 97%, 98%, 99% oder mehr zu verstehen. Unter hohem Druck sind insbesondere Drücke von 5 bar, 10 bar, 15 bar, 20 bar, 25 bar, 30 bar, 35 bar, 40 bar, 50 bar, 60 bar und höher zu verstehen. Durch die vorgeschlagene aktive Steuerung des dem Fluid zur Verfügung stehenden Volumens können die vorhandenen Druckspitzen wesentlich effektiver bedämpft werden, als dies bei den bisherigen, rein passiven Dämpfern, wie beispielsweise Mufflern der Fall ist. Auch kann durch die vorgeschlagene Dämpfung des Fluidschalls die Dämpfung der auftretenden Geräusche quasi "einen Schritt nach vorne" verschoben werden, was üblicherweise besonders effektiv ist. Darüber hinaus ist es nach wie vor möglich, zusätzlich auch den Luftschall selbst durch ein zusätzliches ANR-System zu bedämpfen.

Auch wenn es möglich ist, das System rein mechanisch auszubilden (beispielsweise über mechanisch gekoppelte Membranen; die Membranen können dabei über Hebel oder ein Fluid miteinander gekoppelt werden), so ist es bevorzugt, wenn bei der Fluiddruckpulsationsdämpfungsvorrichtung die Ansteuerung wenigstens einer Volumenbeeinflussungsvorrichtung mittels einer elektronischen Steuervorrichtung erfolgt, welche die wenigstens eine Volumenbeeinflussungsvorrichtung insbesondere nach Art einer Gegenschallquelle ansteuert. Dadurch kann eine besonders weitgehende Dämpfung erzielt werden, die darüber hinaus auch über einen relativ weiten Frequenzbereich hinweg erfolgen kann. Auch kann auf bereits vorhandene Erfahrungen und Erkenntnisse bei ANR-Systemen zurückgegriffen werden, wobei diese selbstverständlich entsprechend angepasst werden sollten. Nicht Erfindungsgemäss ist es möglich die Fluiddruckpulsationsdämpfungsvorrichtung derart auszuführen, dass zumindest eine Volumenbeeinflussungsvorrichtung eine reversible Volumenveränderung verursacht. Dies erfolgt analog zu bislang bekannten ANR-Systemen. Unter einer reversiblen Volumenänderung ist insbesondere ein System zu verstehen, bei dem das dem Fluidsystem (kurzzeitig) entzogene Fluidvolumen an der im Wesentlichen gleichen Stelle zumindest im Wesentlichen vollständig wieder zurückgeführt wird. Hier kommt es in der Regel zu keinen Fluidverlusten und somit zu keinen Effizienzverlusten der eigentlichen fluidführenden Anlage. Diese kann somit mit einem besonders hohen Wirkungsgrad betrieben werden.

Erfindungsgemäss wird bei der Fluiddruckpulsationsdämpfungsvorrichtung zumindest eine Volumenbeeinflussungsvorrichtung vorgesehen die eine irreversible Volumenveränderung verursacht, und die insbesondere eine Druckentlastung verursacht. Hier wird das Fluid, das dem System beispielsweise zur Dämpfung einer Druckspitze entzogen wird, den System dauerhaft entzogen. Dies ist jedoch nicht notwendigerweise dahingehend zu verstehen, dass das Fluid beispielsweise in die Umgebung abgelassen wird. Vielmehr ist es auch denkbar, das Fluid in einen Vorrats- oder Sammelbehälter zu führen, von wo es beispielsweise manuell in das System zurückgeführt werden kann. Auch ist es insbesondere bei Kreislaufsystemen denkbar, dass das derart dem System entzogene Fluid an einer anderen Stelle in den Kreislauf zurückgeführt wird, beispielsweise in der Saugleitung des Kompressors, oder in einer zu der Saugleitung des Kompressors führenden Niederdruckleitung. Eine derartige Anordnung kann darüber hinaus auch zusätzlich die Funktion einer Sicherheitsvorrichtung gegen Überdrücke übernehmen.

Die Fluiddruckpulsationsdämpfungsvorrichtung kann besonders effektiv arbeiten, wenn die Fluiddruckpulsationsdämpfungsvorrichtung, insbesondere wenigstens ein Druckpulsationssensor und/oder wenigstens eine Volumenbeeinflussungsvorrichtung benachbart zu einer Druckpulsationen erzeugenden Vorrichtung angeordnet ist, wobei vorzugsweise wenigstens ein Druckpulsationssensor in Fluidströmungsrichtung gesehen vor wenigstens einer Volumenbeeinflussungsvorrichtung, insbesondere zwischen einer Druckpulsationen erzeugenden Vorrichtung und der Volumenbeeinflussungsvorrichtung, angeordnet ist. Wenn die Fluiddruckpulsationsdämpfungsvorrichtung benachbart zu der die Druckpulsationen erzeugenden Vorrichtung angeordnet ist, können beispielsweise die nachgeschalteten Fluidleitungen verwendet werden, um zusätzliche Dämpfungsmöglichkeiten zu realisieren. Eine Anordnung des Druckpulsationssensors in Fluidströmungsrichtung gesehen vor der Volumenbeeinflussungsvorrichtung hat sich in den bisherigen Versuchen meist als vorteilhaft erwiesen. In einigen Fällen, insbesondere bei Schallausbreitung entgegen der Fluidströmungsrichtung, hat es sich jedoch als günstiger erwiesen, die Volumenbeeinflussungsvorrichtung in Fluidströmungsrichtung gesehen vor dem Druckpulsationssensor anzuordnen. Je näher die Volumenbeeinflussungsvorrichtung und der Druckpulsationssensor beieinander liegen, um so effektiver kann der Gegenschall berechnet werden, da die Druckpulse weniger "verschmieren" können. Die Entfernung muss jedoch so groß gewählt werden, dass die von der Volumenbeeinflussungsvorrichtung auszugebende Volumenvariation bereits vorliegt, beispielsweise von der elektronischen Steuerung bereits berechnet wurde, wenn der zu dämpfende Fluiddruckpuls an der Volumenbeeinflussungsvorrichtung eintrifft.

Besonders vorteilhaft ist es, eine Vorrichtung mit wenigstens einem geschlossenen Fluidkreislauf, insbesondere eine Klimaanlage mit einem Kältemittelkreislauf, besonders vorzugsweise eine Kraftfahrzeugklimaanlage mit einem Kältemittelkreislauf, mit einer Fluiddruckpulsationsdämpfungsvorrichtung der oben beschriebenen Art zu versehen. Gerade bei derartigen Vorrichtungen erweist sich der Einsatz der vorgeschlagenen Fluiddruckpulsationsdämpfungsvorrichtüng als besonders vorteilhaft.

So ist es gerade im Falle von Vorrichtung mit wenigstens einem geschlossenen Fluidkreislauf möglich, dass wenigstens eine Volumenbeeinflussungsvorrichtung als veränderliche fluidische Verbindung zwischen einem Hochdruckteil und einem Niederdruckteil des geschlossenen Fluidkreislaufs ausgebildet ist. Diese Ausführungsform erweist sich oftmals als besonders effektiv. Obwohl hier eine "irreversible" Volumenbeeinflussung stattfindet, kommt es jedoch zu keinem Fluidverlust (z.B. Verlust an Kältemittel). Dieses kann stattdessen auf einfache Weise in einen Niederdruckbereich des Kreislaufs in den Fluidkreislauf zurückgeführt werden. Die für diese Ausbildungsform benötigten Ventile sind weit verbreitet und kostengünstig erhältlich. Da die vorgeschlagene Ausführungsform oftmals eine Verschlechterung des Wirkungsgrads beispielsweise der Klimaanlage mit sich bringt, kann es sinnvoll sein, diese irreversible Volumenbeeinflussung nur bei bestimmten Betriebszuständen vorzusehen.

In diesem Zusammenhang erweist es sich als besonders vorteilhaft, wenn bei der Vorrichtung mit wenigstens einem geschlossenen Fluidkreislauf die fluidische Verbindung zumindest zwei steuerbare Ventile aufweist, welche unabhängig voneinander angesteuert werden können, und zwischen denen ein Ausgleichshohlraum angeordnet ist. Auf diese Weise können sowohl auf der Hochdruckseite, als auch auf der Niederdruckseite die Druckpulsationen des Fluids weitgehend unabhängig voneinander erfolgen. Je größer das Volumen des Ausgleichshohlraums ist, um so unabhängiger ist die Beeinflussbarkeit auf der Hochdruckseite von der Beeinflussbarkeit auf der Niederdruckseite. Da die Druckpulsationen sowohl auf der Hochdruckseite, als auch auf der Niederdruckseite zyklisch und mit einer relativ hohen Frequenz erfolgen, erweist sich in der Praxis jedoch in der Regel ein relativ kleines Volumen des Ausgleichshohlraums als völlig ausreichend.

Besonders vorteilhaft ist es, wenn die vorgeschlagene Vorrichtung mit wenigstens einem geschlossenen Fluidkreislauf derart ausgebildet ist, dass die wenigstens eine Volumenbeeinflussungsvorrichtung in Abhängigkeit vom Betriebszustand des geschlossenen Kreislaufs angesteuert wird. Auf diese Weise ist es möglich, die Volumenbeeinflussungsvorrichtung nur dann zu aktivieren, wenn tatsächlich auch ein hörbarer oder ein störenden Schallpegel, der durch die Druckpulsationen hervorgerufen wird, vorliegt. Somit kann Energie eingespart werden und der Verschleiß der Fluiddruckpulsationsdämpfungsvorrichtung verringert werden. Insbesondere im Falle einer irreversiblen Volumenbeeinflussung kann auch der mittlere Wirkungsgrad der Gesamtanlage erhöht werden.

Im Folgenden wird die Erfindung anhand vorteilhafter Ausführungsbeispiele und unter Bezugnahme auf die beigefügte Zeichnung näher erläutert. Es zeigt:
- Fig. 1:: Einen Teil eines möglichen Aufbaus eines nicht erfindungsgemässen Kältemittelkreislaufs einer Kraftfahrzeugklimaanlage in schematischer Ansicht;
- Fig. 2:: ein nicht erfindungsgemässes Ausführungsbeispiel einer reversiblen Volumenbeeinflus- sungsvorrichtung in schematischer Ansicht;
- Fig.3:: ein erfindungsgemässes Ausführungsbeispiel für einen Teil eines Kältemittelkreis- laufs einer Kraftfahrzeugklimaanlage mit einer irreversiblen Vo- lumenbeeinflussungsvorrichtung in schematischer Ansicht;
- Fig. 4:: eine Veranschaulichung des Effekts einer erfindungsgemässen Fluiddrukpulsati- onsdämpfungsvorrichtung.

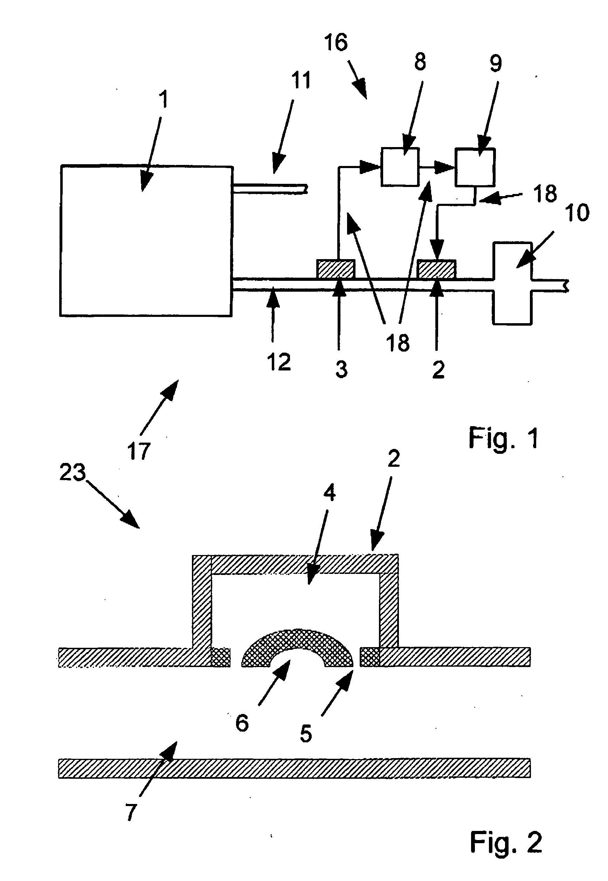

Fig. 1 zeigt in schematischer Ansicht einen möglichen prinzipiellen Aufbau eines Gegenschallsystems 16 für eine Kraftfahrzeugklimaanlage die nicht Teil der Erfindung ist. Der Kältemittelkreislauf 17 der Kraftfahrzeugklimaanlage ist aus Gründen der Übersichtlichkeit nur teilweise dargestellt. Dem Kältemittelkompressor 1 wird über eine Saugleitung 11, die sich auf einem relativ niedrigen Druckniveau befindet, mit Kältemittel versorgt. Bei dem Kältemittel kann es sich um das verbreitete R134a, um R744, oder aber auch um sonstige alternative Kältemittel handeln. Im Kältemittelkompressor 1 wird der Druck des Kältemittels auf den auf der Hochdruckseite 12 des Kältemittelkreislaufs 17 herrschenden Druck erhöht, und über die Hochdruckleitung 12 abgegeben. Unmittelbar nach dem Kältemittelkompressor 1 ist in Strömungsrichtung des Kältemittels gesehen an der Hochdruckleitung 12 eine Drucksonde 3 angeordnet. Die Drucksonde 3 ist als dynamische Drucksonde 3 ausgebildet, das heißt, sie kann Druckvariationen mit einer hohen Zeitauflösung registrieren. Einen "Gleichspannungsanteil" des Fluiddrucks muss die Drucksonde 3 dagegen nicht registrieren.

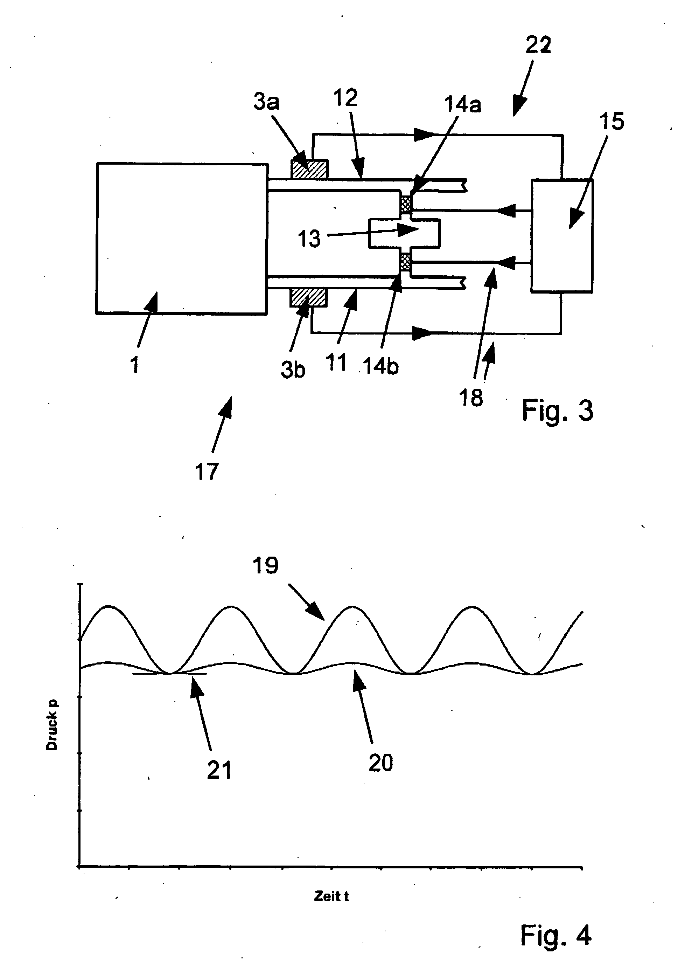

Die von der Drucksonde 3 aufgenommenen Meßwerte 19 werden über eines Kabel 18 an eine elektronische Steuerung 8 übertragen. Bei der elektronischen Steuerung 8 kann es sich beispielsweise um einen Einplatinencomputer handeln. Die Meßwerte 19 (vergleichsweise entsprechend den dynamischen Anteilen in. Fig. 4) werden von der elektronisches Steuerung 8 mit Hilfe eines in der elektronischen Steuerung 8 hinterlegten Algorithmus verrechnet. Als Ergebnis wird von der elektronischen Steuerung 8 ein Ausgabesignal ausgegeben, das über ein weiteres Kabel 18 an einen Verstärker 9 geleitet wird. Der Verstärker 9 verstärkt das Signal entsprechend und leitet es an den Schallgeber 2 weiter, der sich an der Hochdruckleitung 12 des Kältemittelkreislaufs 17 befindet. Der Algorithmus in der elektronischen Steuerung 8 ist so gewählt, dass der Schallgeber 2 eine gegenphasige Pulsation im Kältemittel erzeugt und als Folge der Gesamtpegel 20 der Druckpulsationen im Kältemittel stark gesenkt wird. Auf diese Weise wird letztlich das in die Fahrzeugkabine eingetragene Kompressorgeräusch deutlich gesenkt.

Die Wirkung des Gegenschallsystems 16 kann problemlaus auf tiefere Frequenzen beschränkt werden. Da die niedrigsten vom Käftemittelkompressor 1 erzeugten Druckpulsationen je nach Drehzahl, Übersetzung und Zylinderzahl üblicherweise im Bereich von etwa 70 Hz, 100 Hz, 120 Hz oder 150 Hz liegen, reicht bei praktischen Anwendungen im Gebiet von Kraftfahrzeugklimaanlagen oftmals eine Grenzfrequenz des Gegenschallsystems 16 von etwa 1,5 kHz aus.

Höhere Frequenzanteile, insbesondere solche, die nicht vom Gegenschallsystem 16 gedämpft werden, können durch einen in der Hochdruckleitung 12 nachgeschalteten Muffler 10 gedämpft werden. Der Muffler 10 kann jedoch kleiner als bislang üblich ausgeführt werden, da er keine tieffrequenten Druckpulsationen dämpfen muss.

Ein möglicher Aufbau für den Schallgeber 2 ist in Fig. 2 skizziert. Der Schallgeber 2 weist eine Gehäusung 23 auf, die unmittelbar an der Hochdruckleitung 12 befestigt ist. Die Gehäusung 23 des Schallgeber 2 bildet dabei ein Hintergrundvolumen 4 aus. Zwischen dem Hintergrundvolumen 4 der Gehäusung 23 und dem Innenvolumen 7 der Hochdruckleitung 12 ist ein piezoelektrischer Biegeschwinger 6 angeordnet. Die Durchbiegung des Biegeschwingers 6 kann durch einen von der elektronischen Steuerung 8 berechneten und vom Verstärker 9 verstärkten elektrischen Impuls verändert werden. Dadurch kann das Innenvolumen 7 der Hochdruckleitung 12 aktiv variiert werden, und dadurch können die Druckpulsationen des Kältemittels gedämpft werden.

Wie aus Fig. 2 weiterhin ersichtlich ist, sind zwischen Hintergrundvolumen 4 und Innenvolumen 7 der Hochdruckleitung 12 Druckausgleichsverbindungen 5 vorgesehen. Durch diese kann Kältemittel hindurch strömen, so dass auf beiden Seiten 4, 7 des Biegeschwingers 6 der gleiche zeitlich gemittelte Druck ("Gleichspannungsanteil") anliegt. Wird der Schallgeber 2 wie in Fig. 1 dargestellt unmittelbar hinter dem Kompressor 1 angeordnet, so liegt das Kältemittel in gasförmiger oder überkritischer Form (je nachdem welches Kältemittel eingesetzt wird) vor. Wird der Schallgeber 2 dagegen in einem Teil des Kältemittelkreislaufs 17 betrieben, in dem das Kältemittel (überwiegend) in flüssiger Form vorliegt, so kann das sich im Hintergrundvolumen 4 befindliche Kältemittel durch eine Beheizung in den gasförmigen Zustand gebracht werden. Dazu kann eine elektrische Heizung, eine Verwendung von Auspuffgasen eines Verbrennungsmotors oder auch eine die Oberfläche vergrößernde Vorrichtung (z.B. ein sogenannter Kühlkörper) verwendet werden.

Der in Fig. 2 dargestellte Aufbau eines Schallgebers 2 kann in analoger Weise auch für einen Druckpulsationssensor 3 verwendet werden. Insbesondere ist dabei der Biegeschwinger 6 entsprechend auszuführen.

In Fig. 3 ist eine erfindungsgemässe "irreversible" Volumenbeeinflussung bei einem geschlossenen Kältemittelkreislauf dargestellt. Hier sind zwischen die vom Kompressor 1 kommende Hochdruckleitung 12 und die zum Kompressor 1 führende Saugleitung 11 zwei in Serie geschaltete (bezogen auf den Fluidpfad) elektrisch steuerbare Ventile 14a, 14b angeordnet. Zwischen den beiden elektrisch steuerbaren Ventilen 14a, 14b ist darüber hinaus noch ein Puffervolumen 13 vorgesehen. Die elektrisch steuerbaren Ventile 14a, 14b werden von einer elektronischen Steuerung 15 so angesteuert, dass sie in Verbindung mit dem Puffervolumen 13 als aktive Dämpfungsvorrichtung wirken. Wenn also auf der Hochdruckseite 12 der dynamische Druck ansteigt öffnet das elektrisch steuerbare Ventil 14a auf der Seite der Hochdruckleitung 12, um Kältemittel in das Puffervolumen 13 abzulassen. Dadurch wird der dynamische Druck in der Hochdruckleitung 12 gesenkt. Auf der Niederdruckseite mit der Saugleitung 11 sind die Verhältnisse entsprechend umgekehrt. Der Druck im Puffervolumen 13 wird üblicherweise zwischen dem Hochdruck in der Hochdruckleitung 12 und dem Niederdruck in der Saugleitung 11 liegen.

Um unterschiedliche Pegel und damit Massenstromanforderungen auf der Niederdruckseite 11 und der Hochdruckseite 12 auszugleichen, kann eines der elektrisch steuerbaren Ventile 14a, 14b (oder beide) zusätzlich noch so eingestellt werden, dass dem Regelmassenstrom ein konstanter Massenstrom überlagert wird.

Als Signalgeber für die elektronische Regelschaltung 15 dienen nunmehr zwei dynamische Drucksensoren 3a, 3b, von denen jeweils einer auf der Hochdruckseite 12 bzw. auf der Niederdruckseite 11 angeordnet ist.

Ein großer Vorteil des in Fig. 3 dargestellten erfindungsgemässen Systems liegt darin, dass sowohl auf der Hochdruckseite 12, als auch auf der Niederdruckseite 11 eine aktive Schallbekämpfung erfolgen kann. Soll nur eine Seite aktiv bedämpft werden, so genügt es, auf der jeweiligen Gegenseite das elektrisch steuerbare Ventil 14a, 14b in einem Konstantmodus zu betreiben, um die Druckdifferenz zum Puffervolumen 13 annähernd konstant zu halten. In einer vereinfachten Variante kann das im Konstantmodus betriebene elektrisch steuerbare Ventil durch eine Drossel ersetzt werden, oder der Massenstrom kann direkt in eine geeignete Leitung 11, 12 abgegeben werden.

Die in Zusammenhang mit Fig. 3 beschriebenen erfindungsgemässen Ausbildungsmöglichkeiten weisen den Nachteil auf, dass der mittlere Druck auf der Hochdruckseite 12 leicht abgesenkt wird; umgekehrt steigt der mittlere Druck auf der Niederdruckseite 11. Dadurch sinkt er Wirkungsgrad des Kältemittelkreislauf 17 etwas ab. Um den Wirkungsgrad so wenig wie möglich abzusenken, ist es vorteilhaft, wenn der in Fig. 4 dargestellte Setpoint 21 in Abhängigkeit vom Betriebspunkt und vom Fahrbetriebszustand des Kraftfahrzeugs gewählt wird. Der Setpoint 21 legt fest, auf welches Niveau der Druck auf der Hochdruckseite 12 herabreguliert wird, bzw. auf der Niederdruckseite 11 heraufreguliert wird. Wenn z.B. bei hohen Motordrehzahlen das Motorengeräusch die Betriebsgeräusche der Klimaanlage ohnehin übertönt, so wird der Setpoint 21 entsprechend hochgeregelt, so dass ggf. die elektrisch steuerbaren Ventile 14a, 14b vollständig geschlossen sind (Setpoint 21 = pₘₐₓ). Dies ist auch möglich, wenn eine sehr hohe Kälteleistung gefordert wird.

Die beste Reduktion auf der Hochdruckseite 12 wird üblicherweise dann erzielt, wenn der Wert des Setpoints 21 kleiner gleich dem minimalen Wert pₘᵢₙ des zeitlichen Druckverlaufs entspricht. Umgekehrt ist es auf der Niederdruckseite 11.

Der zeitliche Verlauf ist durch die Kompressor-Hubfrequenz oder eine sonstige durch den Kompressor 1 verursachte Geräuschfrequenz charakterisiert. Der "Gleichspannungsanteil" des Drucks ist allerdings, bedingt durch die Betriebsparameter des Kältemittelkreislauf 17, ebenfalls zeitveränderlich, wenn auch mit einer deutlich anderen Zeitkonstante als die Kompressordruckimpulse. So müssen durch geeignete Filterung des Drucksignals beide Anteile separat bestimmt werden, um in jedem Betriebszustand den Setpoint 21 optimal zu bestimmen.

## Patentansprüche

1. Fluiddruckpulsationsdämpfungsvorrichtung (22) zum Dämpfen von Druckpulsationen in Fluiden mit einem Flüssigkeitsanteil von 70 %, 75%, 80%, 85%, 90%, 93%, 95%, 96%, 97%, 98%, 99% oder mehr) und/oder von Druckpulsationen in Fluiden mit einem Druck von 5 bar, 10 bar, 15 bar, 20 bar, 25 bar, 30 bar, 35 bar, 40 bar, 50 bar, 60 bar oder höher mit wenigstens einer Volumenbeeinflussungsvorrichtung (14a, 14b), durch die das dem Fluid zur Verfügung stehende Volumen beeinflussbar ist, mit wenigstens einem Druckpulsationssensor (3a, 3b), wobei wenigstens eine Volumenbeeinflussungsvorrichtung (14a, 14b) in Abhängigkeit vom Ausgabewert wenigstens eines der Druckpulsationssensoren (3a, 3b) angesteuert (15) wird, **dadurch gekennzeichnet, dass** zumindest eine Volumenbeeinflussungsvorrichtung (14a, 14b) eine irreversible Volumenveränderung verursacht.

2. Fluiddruckpulsationsdämpfungsvorrichtung (22) nach Anspruch 1, **dadurch gekennzeichnet, dass** die irreversible Volumenveränderung eine Druckentlastung ist.

3. Fluiddruckpulsationsdämpfungsvorrichtung (22) nach Anspruch 1 oder 2,
**dadurch gekennzeichnet, dass** die Ansteuerung wenigstens einer Volumenbeeinflussungsvorrichtung (14a, 14b) mittels einer elektronischen Steuervorrichtung (15) erfolgt, welche die wenigstens eine Volumenbeeinflussungsvorrichtung (14a, 14b) nach Art einer Gegenschallquelle ansteuert.

4. Fluiddruckpulsationsdämpfungsvorrichtung nach einem der vorangehenden Ansprüche, **dadurch gekennzeichnet, dass** die Fluiddruckpulsationsdämpfungsvorrichtung (22), insbesondere wenigstens ein Druckpulsationssensor (3a, 3b) und/oder wenigstens eine Volumenbeeinflussungsvorrichtung (14a, 14b) benachbart zu einer Druckpulsationen erzeugenden Vorrichtung (1) angeordnet sind, wobei vorzugsweise wenigstens ein Druckpulsationssensor (3a, 3b) in Fluidströmungsrichtung gesehen vor wenigstens einer Volumenbeeinflussungsvorrichtung (14a, 14b) angeordnet ist.

5. Vorrichtung mit wenigstens einem geschlossenen Fluidkreislauf (17), insbesondere Klimaanlage mit einem Kaltemittelkreislauf, besonders vorzugsweise Kraftfahrzeugklimaanlage mit einem Käftemittelkreislauf, **gekennzeichnet durch** eine Fluiddmckpulsationsdämpfungsvorrichtung (22) gemäß einem der Ansprüche 1 bis 4.

6. Vorrichtung mit wenigstens einem geschlossenen Fluidkreislauf (17) nach Anspruch 5, **dadurch gekennzeichnet, dass** wenigstens eine Volumenbeeinflussungsvorrichtung (14a, 14b) als veränderliche fluidische Verbindung (13) zwischen einem Hochdrucktell (12) und einem Niederdruckteil (11) des geschlossenen Fluldkreislaufs (17) ausgebildet ist.

7. Vorrichtung mit wenigstens einem geschlossenen Fluidkreislauf (17) nach Anspruch 6, **dadurch gekennzeichnet, dass** die fluidische Verbindung zumindest zwei steuerbare Ventile (14a, 14b) aufweist, welche unabhängig voneinander angesteuert werden können, und zwischen denen ein Ausgleichshohlraum (13) angeordnet ist.

8. Vorrichtung mit wenigstens einem geschlossenen Fluidkreislauf (17) nach einem der Ansprüche 5 bis 7, **dadurch gekennzeichnet, dass** die wenigstens eine Volumenbeeinflussungsvorrichtung (22) in Abhängigkeit vom Betriebszustand des geschlossenen Kreislaufs (17) angesteuert wird.

## Claims

1. A fluid pressure pulsation attenuation device (22) for attenuating pressure pulsations in fluids having a liquid ratio of 70%, 75%, 80%, 85%, 90%, 93%, 95%, 96%, 97%, 98%, 99% or more, and/or pressure pulsations in fluids having a pressure of 5 bar, 10 bar, 15 bar, 20 bar, 25 bar, 30 bar, 35 bar, 40 bar, 50 bar, 60 bar or higher, comprising at least one volumetric capacity adjustment device (14a, 14b), with which the volumetric capacity available to the fluid can be adjuster, and comprising at least one pressure pulsation sensor (3a, 3b), wherein at least one volumetric capacity adjustment device (14a, 14b) is actuated on the basis of the output value from at least one of the pressure pulsation sensors (3a, 3b), **characterized in that** at least one volumetric capacity adjustment device (14a, 14b) effects an irreversible change in volumetric capacity.

2. The fluid pressure pulsation attenuation device (22) according to claim 1, **characterized in that** the irreversible change in volumetric capacity is a release of pressure.

3. The fluid pressure pulsation attenuation device (22) according to claim 1 or 2, **characterized in that** at least one volumetric capacity adjustment device (14a, 14b) is actuated by means of an electronic control device (15), which actuates the at least one volumetric capacity adjustment device (14a, 14b) in the manner of an anti-noise source.

4. The fluid pressure pulsation attenuation device according to any one of the preceding claims, **characterized in that** the fluid pressure pulsation attenuation device (22), particularly at least one pressure pulsation sensor (3a, 3b) and/or at least one volumetric capacity adjustment device (14a, 14b) are positioned adjacent to a device (1) for generating pressure pulsations, wherein at least one pressure pulsation sensor (3a, 3b) is preferably arranged upstream of at least one volumetric capacity adjustment device (14a, 14b), as viewed in the direction of fluid flow.

5. A device having at least one closed fluid circuit (17), particularly an air conditioning system having a coolant circuit, particularly preferably a motor vehicle air conditioning system having a coolant circuit, **characterized by** a fluid pressure pulsation attenuation device (22) according to any one of claims 1 to 4.

6. The device having at least one closed fluid circuit (17) according to claim 5, **characterized in that** at least one volumetric capacity adjustment device (14a, 14b) is embodied as an adjustable fluid connection (13) between a high pressure part (12) and a low pressure part (11) of the closed fluid circuit (17).

7. The device having at least one closed fluid circuit (17) according to claim 6, **characterized in that** the fluid connection has at least two controllable valves (14a, 14b), which can be actuated independently of one anther and between which a compensation space (13) is located.

8. The device having at least one closed fluid circuit (17) according to any one of claims 5 to 7, **characterized in that** the at least one volumetric capacity adjustment device (22) is actuated on the basis of the operating state of the closed circuit (17).

## Revendications

1. Dispositif (22) d'amortissement de pulsations de pression de fluides servant à l'amortissement de pulsations de pression dans des fluides comportant une proportion de liquide de 70 %, 75 %, 80 %, 85 %, 90 %, 93 %, 95 %, 96 %, 97 %, 98 %, 99 % ou plus et / ou de pulsations de pression dans des fluides ayant une pression de 5 bars, 10 bars, 15 bars, 20 bars, 25 bars, 30 bars, 35 bars, 40 bars, 50 bars, 60 bars ou supérieure, comprenant au moins un dispositif (14a, 14b) influençant le volume, dispositif par lequel peut être influencé le volume disponible pour le fluide, comprenant au moins un détecteur (3a, 3b) de pulsations de pression, où au moins un dispositif (14a, 14b) influençant le volume est activé (15) en fonction de la valeur de sortie d'au moins l'un des capteurs (3a, 3b) de pulsations de pression, **caractérisé en ce qu'**au moins un dispositif (14a, 14b) influençant le volume provoque une modification de volume irréversible.

2. Dispositif (22) d'amortissement de pulsations de pression de fluide selon la revendication 1, **caractérisé en ce que** la modification de volume irréversible est un délestage de pression.

3. Dispositif (22) d'amortissement de pulsations de pression de fluides selon la revendication 1 ou 2, **caractérisé en ce que** l'activation d'au moins un dispositif (14a, 14b) influençant le volume se produit au moyen d'un dispositif de commande électronique (15) qui active le dispositif (14a, 14b) - au moins au nombre de un - influençant le volume, à la façon d'une source sonore opposée.

4. Dispositif d'amortissement de pulsations de pression de fluides selon l'une quelconque des revendications précédentes, **caractérisé en ce que** le dispositif (22) d'amortissement de pulsations de pression de fluides, en particulier au moins un capteur (3a, 3b) de pulsations de pression et / ou au moins un dispositif (14a, 14b) influençant le volume, sont disposés à proximité d'un dispositif (1) produisant des pulsations de pression, où de préférence au moins un capteur (3a, 3b) de pulsations de pression, vu dans la direction d'écoulement du fluide, est disposé en amont d'au moins un dispositif (14a, 14b) influençant le volume.

5. Dispositif comportant au moins un circuit de fluide fermé (17), en particulier système de climatisation comprenant un circuit de fluide frigorigène, en particulier de préférence système de climatisation d'un véhicule automobile comprenant un circuit de fluide frigorigène, **caractérisé par** und dispositif (22) d'amortissement de pulsations de pression de fluides conformément à l'une quelconque des revendications 1 à 4.

6. Dispositif comportant au moins un circuit de fluide ferme (17) selon la revendication 5, **caractérisé en ce qu'**au moins un dispositif (14a, 14b) influençant le volume est configuré comme une communication (13) fluidique variable, située entre une partie haute pression (12) et une partie basse pression (11) du circuit de fluide fermé (17).

7. Dispositif comportant au moins un circuit de fluide fermé (17) selon la revendication 6, **caractérisé en ce que** la communication fluidique présente au moins deux soupapes réglables (14a, 14b) qui meuvent être activées indépendamment l'une de l'autre et entre desquelles est disposé un espace creux de compensation (13).

8. Dispositif comportant au moins un circuit de fluide fermé (17) selon l'une quelconque des revendication 5 à 7, **caractérisé en ce que** le dispositif (14a, 14b) - au moins au nombre de un - influençant le volume est activé en fonction de l'état de fonctionnement du circuit de fluide fermé (17).
